# EUROPEAN PATENT APPLICATION

(11) **EP 3 741 497 A1**
(43) Date of publication of application: **25.11.2020**
(21) Application number: 19176550.2
(22) Date of filing: 24.05.2019
(51) Int. Cl.: B23K 35/28, B23K 1/00, B23K 1/008, B23K 35/36, B23K 35/362, B23K 35/02, C22C 1/04, C22C 18/00, C22C 18/04, C22C 21/02, C22C 21/04, F28F 1/00, B23K 103/04, B23K 101/16

(54) **FILLER METAL COMPOSITION AND BRAZING FLUX COMPOSITION, AND METHOD OF BRAZING USING THESE COMPOUNDS**

(71) Applicant: Valeo Systemes Thermiques-THS, 78322 Le Mesnil Saint Denis Cedex (FR)
(72) Inventor: GARCIA ZALDIVAR, José, 78322 LE MESNIL SAINT DENIS Cedex (FR); PHILIPPE, Maryse, 72210 LA SUZE-SUR-SARTHE (FR); CASENAVE, Christian, 72210 LA SUZE SUR SARTHE (FR); SPORNA, Dominik, 32 050 SKAWINA (FR); SMITH, Didier, 78322 LE MESNIL SAINT DENIS Cedex (FR); DE PELSEMAEKER, Georges, 78322 LE MESNIL SAINT DENIS CEDEX (FR); CITTI, Isabelle, 78320 LE MESNIL SAINT DENIS CEDEX (FR); ROMANSKI, Grzegorz, 32 050 SKAWINA (PL); JOP, Lukasz, 32 050 SKAWINA (PL)
(74) Representative: Tran, Chi-Hai

(57) **Abstract**

The invention concerns a filler metal composition comprising :
a) a powder of an Al-Si alloy of following formula I:

AlₓS_{iy} formula I

wherein
- x is the weight percentage, on the basis of the total weight of the AISi alloy of Al, and is comprised between 86 wt % and 90 wt %, and
- y is the weight percentage, on the basis of the total weight of the AISi alloy of Si, and is comprised between 10 and 14 wt %,

b) zinc,
so that the zinc to silicon mass ratio (Zn/Si) is more than 0.3 preferably greater than or equal to 1.5.

## Description

The invention relates to a filler metal composition, to a brazing flux composition, and to a method of brazing a tube to a fin.

It also relates to a method for manufacturing a heat exchanger, especially an automotive heat exchanger, such as a condenser, a gas cooler, a chiller, an evaporator, or a combo-cooler.

A heat exchanger, like a condenser or gas cooler, is a device comprising tubes in which a refrigerant fluid circulates. It also comprises collectors for the refrigerant and fins to exchange heat with an air flow circulating between the tubes.

Some of the heat exchangers of cars are placed in front of the car and consequently undergo corrosion, in particular by the ambient air.

For manufacturing heat exchangers, it is well known to braze the tubes with the collectors and fins.

To avoid corrosion is also known to vaporize zinc by an arc spray technology.

In this technology, liquid zinc is sprayed on the surface of the tubes, for depositing about 6-7 g/m² of zinc in order to provide a complete coating of the surface of the tube and for compensating the non uniform distribution or repartition of zinc.

Although zinc may protect the tube from perforation, it remains that a high concentration of zinc at the junction of the tube with the fins leads to a rapid corrosion at this junction and provokes fin debonding with the consequent loss of heat transfer performance.

As fin debonding is also created by the use of clad fin material, a coating has been applied on tube so as to create brazing joint between bare fin and extruded tube and brings corrosion resistance to the tube. This coating is composed of flux called NOCOLOK® Sil Flux Fine Grade and zinc. This NOCOLOK® Sil Flux Fine Grade is composed of NOCOLOK® flux and silicon powder. The NOCOLOK® flux is a brazing flux composed of kalium salts and fluoroaluminates K₁₋₃AlF₄₋₆.

However, the NOCOLOK® Sil Flux Fine grade contains sometimes big particles of silicon and create agglomerates of silicon particles in some brazed area with such composition.

In these cases, the local concentration of silicon generates erosion of the tube during the brazing process, the affected areas becoming site for corrosion initiation.

It has then been proposed a method consisting in coating the tubes with a flux brazing composition containing a powder of an AISi alloy, the silicon percentage in the AISi alloy ranging from 12 to 40wt %, and zinc. Zinc is introduced in the composition as AlZn, or as KZnF₃ flux.

In this method, the AISi alloy has a composition above the eutectic of 12.6 wt % of Si which allows AISi liquid metal in equilibrium with silicon solid particles. In this case, the metallurgical equilibrium during melting phase in the brazing process produces silicon solid particles which may locally concentrate. This local concentration of silicon creates some tube erosion during brazing, which becomes a preferable site for corrosion initiation.

The invention aims to palliate the drawbacks of the prior art.

For this aim, the invention proposes a filler metal composition comprising :
a) a powder of an AISi alloy of following formula I:

   AlₓSi_{y} formula I

   wherein
   - x is the weight percentage, on the basis of the total weight of the AISi alloy of Al, and is comprised between 86 wt % and 90 wt %, preferably is of 87.4 wt %, and
   - y is the weight percentage, on the basis of the total weight of the AISi alloy of Si, and is comprised between 10 and 14 wt %, preferably is of 12.6 wt %,
b) zinc,
so the target is that corrosion occurs in lateral way. The invention discloses composition allowing to reaching this target. Among these compositions, the zinc to silicon mass ratio (Zn/Si) greater than 0.3, preferably greater than or equal to 1.5 is more favorable.

Advantageously, the filler metal composition further comprises 51-65 wt %, preferably 60-64 wt %, and more preferably 61 wt %, on the basis of the total weight of the filler metal composition of the compound of formula I.

Advantageously, the filler metal composition further comprises 0-15 wt %, on the basis of the total weight of the filler metal composition, of a compound of following formula II:

AlₐZn_{b} formula II

wherein
- a is the weight percentage, on the basis of the total weight of the compound of formula II, of Al, and is comprised between 0 wt % and 20 wt %, and
- b is the weight percentage, on the basis of the total weight of the compound of formula II of Zn, and is comprised between 80 wt % and 100 wt %.

Advantageously, the filler metal composition further comprises 25-45 wt %, preferably 27-30 wt %, more preferably 27 wt %, on the basis of the total weight of the filler metal composition, of one or combination of flux chosen among KZnF₃, KAlF₄, K₂AlF₅, K₃AlF₆, K₂LiAlF₆, Li₃AlF₆, CsAlF₄ and mixtures thereof.

In a first variant, the filler metal composition of the invention comprises 2-15 wt %, preferably 7.9-11.5 wt %, of the compound of formula II wherein a = 0 wt % and b = 100 wt %.

In a second variant, the filler metal composition of the invention comprises 2-15 wt %, preferably 12 wt %, of the compound of formula II wherein a = 5 wt % and b = 95 wt %.

In a third variant, the filler metal composition of the invention comprising 2-15 wt %, preferably 12.8 wt %, of the compound of formula II wherein a = 12 wt % and b = 88 wt %.

In a fourth variant, the filler metal composition of the invention comprises 0 wt % of the compound of formula II and the flux is a mixture of
1) KZnF₃ in an amount sufficient for providing between 2 wt % and 15 wt %, preferably 13 wt %, of Zn, and
2) at least one other flux for providing a total amount of flux comprised between 25wt % and 45 wt %, preferably of 27 wt % of flux in the filler metal composition.

In all the variants of the filler metal composition of the invention, preferably the particles of powder of Al-Si alloy have a D50 diameter comprised between 5 and 20 µm,

In all the variants of the filler metal composition of the invention, preferably the particles of the flux have a D50 diameter comprised between 2 and 6 µm.

Still in all the variants of the filler metal composition of the invention, preferably the particles of the compound of formula II have a D50 diameter comprised between.

The invention also proposes a brazing flux composition comprising:
- 75-95 wt %, preferably 84-90 wt %, more preferably 82 wt %, on the basis of the total weight of the brazing flux composition, of filler metal composition of the invention, and
- 5-25 wt %, preferably 10-16 wt %, more preferably 18 wt %, on the basis of the total weight of the brazing flux composition, of a binder, preferably chosen among an alkyde compatible acrylic ester resin B67, preferably an isobutylmethacrylate polymer, a mixture of C₉-C₁₂ aromatic hydrocarbons preferably toluene or xylen, and mixtures thereof,
- optionally 0 to 0,5 wt % of surface active agent(s), preferably chosen among fluorocarbon modified polymer or polyacrylate polymer.

The invention still proposes a method for brazing an aluminum or an aluminum alloy tube to a fin comprising aluminum or aluminum alloy comprising a step a) of depositing a brazing flux composition according to the invention on the surface of the tube.

Preferably, the method of the invention comprises, before step a) of depositing the brazing flux composition, a step b) of preparing this brazing flux composition, this step b) comprising mixing together:
- 75-95 wt %, preferably 84-90 wt %, more preferably 82 wt %, on the basis of the total weight of the brazing flux composition, of a filler metal composition according to the invention, and
- 5-25 wt %, preferably 10-16 wt %, more preferably 18 wt %, on the basis of the total weight of the brazing flux composition, of a binder, preferably chosen among an alkyde compatible acrylic ester resin, preferably an isobutylmethacrylate polymer, a mixture of C₉-C₁₂ aromatic hydrocarbons preferably toluene or xylen, and mixtures thereof, and
- 0 to 0,5 wt % of surface active agent(s), preferably chosen among fluorocarbon modified polymer or polyacrylate polymer.

Still preferably, in the method of the invention, the brazing flux composition of the invention is deposited in an amount of between 25 and 45 wt %, preferably 25 and 40 g/m², more preferably of 27,5 g/m².

Also preferably, in the method of the invention, step a) of depositing the brazing flux composition is carried out by spray or roller application and the brazing flux composition is put in a solvent in which the optional binder is soluble and in which the brazing flux composition is not soluble.

In this case, preferably the solvent is added in an amount such that the mixture of the flux brazing composition and solvent has a solid content higher than 70 wt %.

The invention also proposes a method for manufacturing a condenser comprising a step of coating a aluminum or aluminum alloy tube with a brazing flux composition according to the invention.

The invention will be better understood and other characteristics and advantageous thereof will become more apparent when reading the following description which is made in reference to the figures in which:
- figure 1 represents the phase diagram of Al-Si,
- figure 2 shows a photograph of a fin brazed by the zinc arc spray technology of the prior art:
- on the left hand, the extruded aluminum tube is shown brazed to the support just after brazing,
- on the middle, the same brazed extruded aluminum tube is shown after 240 hours of life in the Swaat test, and
- on the right hand, the same brazed extruded aluminum tube is shown after 480 hours of life in the Swaat test,

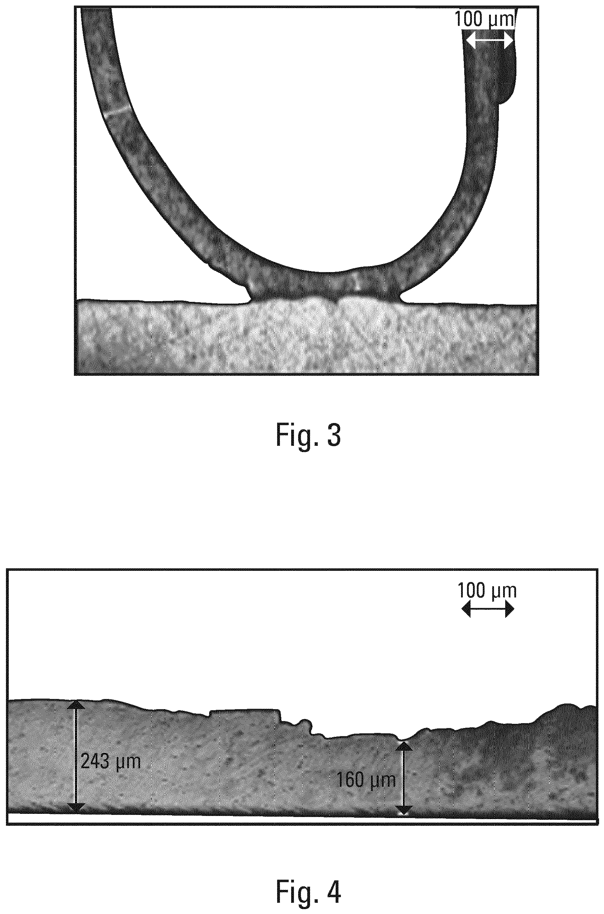

- figure 3 shows the metallographic analysis of an extruded aluminum tube brazed to a fin with a brazing flux composition of the invention just after brazing,
- figure 4 is a photograph showing the tube lateral corrosion on a gas cooler after 1000 hours of life in the Swaat test,

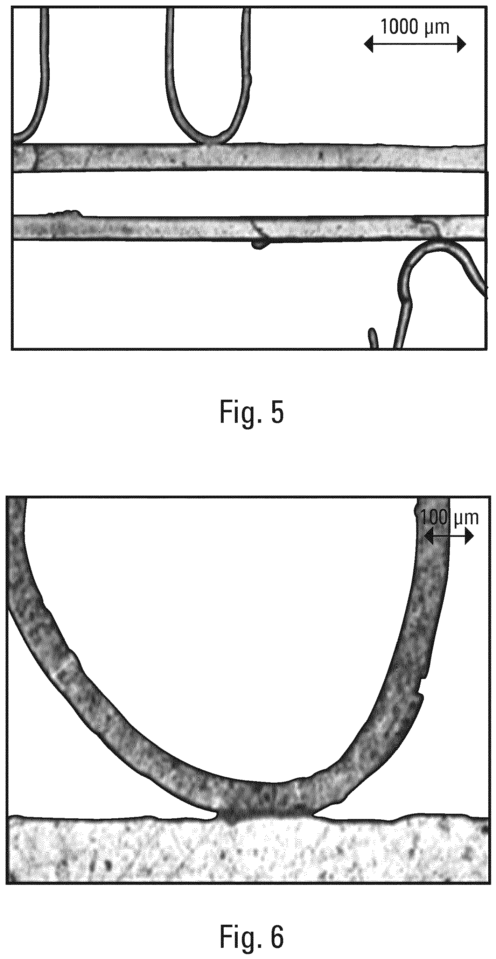

- figure 5 shows the metallographic analysis on the same gas cooler as represented in figure 4 after 1000 hours of life in the Swaat test,
- figure 6 shows the metallographic analysis of an extruded aluminum tube brazed to a fin with the brazing flux composition of the comparative example, and

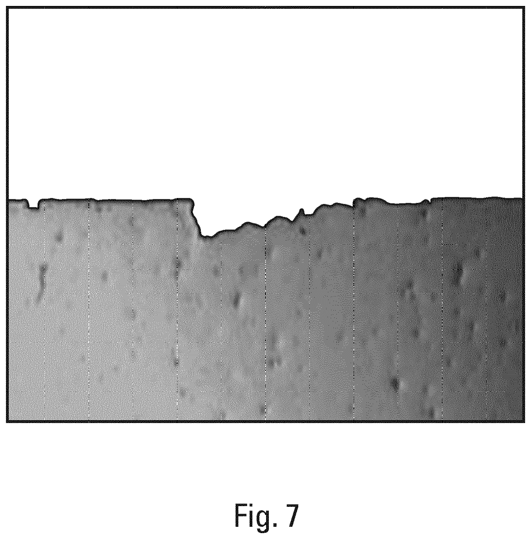

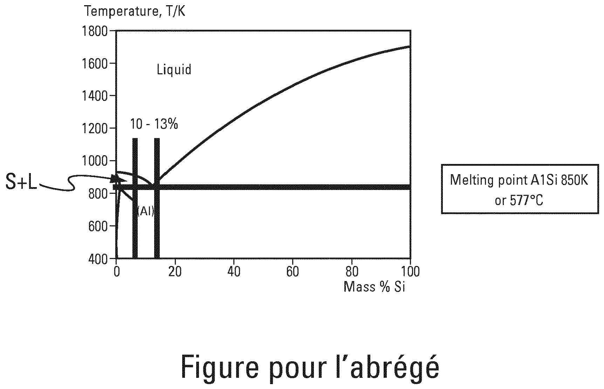

- figure 7 is a photograph showing the tube lateral corrosion on a condenser brazed with the brazing flux composition of the comparative example after 1320 hours of life.

In the present text, the terms "D50 diameter" mean the median particle diameter by mass. It can be measured by sieving.

In order to reduce corrosion of a heat exchanger such as a condenser, gas cooler, evaporator, a chiller or a combo-cooler at the brazing junction, the invention proposes a filler metal composition and a brazing flux composition which enables brazing with limited quantity of flux thereby facilitating the elimination of fluorine which is produced during the brazing and moreover enables to deposit a high amount, but not too high amount, of zinc for a better protection against corrosion.

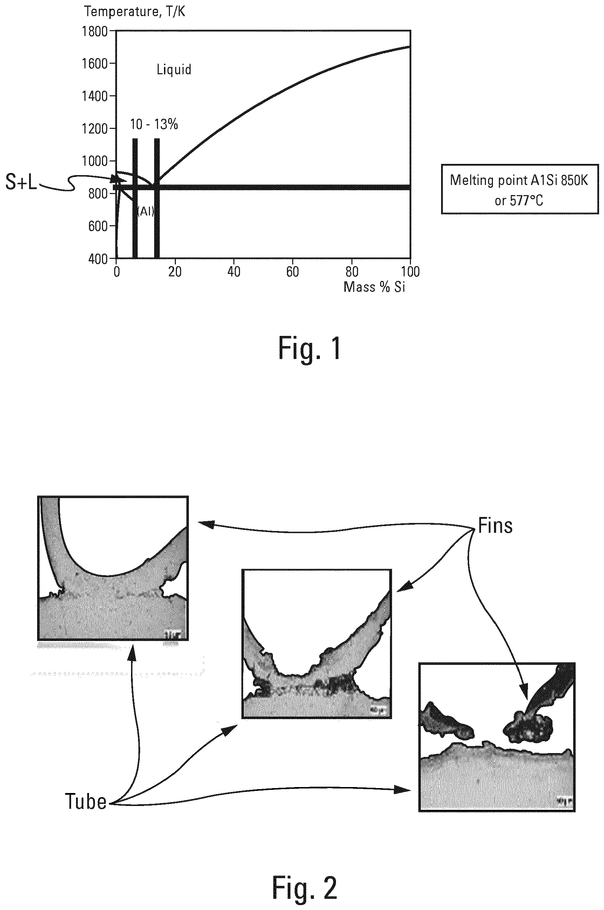

This is possible due to the use of particles of an AISi alloy selected in the composition of less than 14 wt % in relation to the Al-Si phase diagram which is represented in figure 1, showing that AISi alloy solid is in equilibrium with pure aluminum when the alloy of composition Al_{87.4}Si_{12.6} melts during brazing, in combination with zinc. In parallel, the zinc to silicon mass ratio (Zn/Si) is greater than 1, preferably greater than or equal to 1.5.

Thus, the AISi alloy which is used in the filler metal composition and brazing flux composition of the invention has the following formula I:

AlₓSi_{y} formula I

wherein
- x is the weight percentage, on the basis of the total weight of the Al-Si alloy, and is comprised between 86 wt % and 90 wt %, preferably is of 87.4wt %, and
- y is the weight percentage, on the basis of the total weight of the Al-Si alloy, and is comprised between 10 and 14 wt %, preferably is of 12.6 wt %.

Zinc prevents localized corrosion of aluminum, moving the corrosion features to lateral corrosion or homogeneous corrosion.

The use of particles of this AISi alloy of formula I allows removing the clad from the fins and creating brazing joint either with fins or with the header.

The particle size of the AISi alloy of formula I is selected such that the D50 diameter is in the range of 5 µm to 20 µm, this range contributing to brazing with limited quantity of flux.

Numerous flux can be used in the filler metal composition and brazing flux composition of the invention such as KAlF₄, K₂AlF₅, K₃AlF₆, KZnF₃, K₂LiAlF₆, Li₃AlF₆, and mixtures thereof, *i.e.* flux containing fluorine.

Furthermore, cesium flux CsAlF₄ can also be used, still in a lower amount than in the prior art so that it is also easer to eliminate. Cesium flux is known to reduce the flux consumption when using magnesium containing alloys for brazing and prevent the formation of magnesium oxides and fluorides.

The relation between the particle size of the AISi alloy of formula I and the flux quantity is related to the surface of the AISi alloy of formula I particles that are covered with natural oxide. This oxide has to be removed by the flux during brazing. The particle size of the AISi alloy used in the invention is selected to reduce the flux quantity to less than 12 g/m² during the brazing.

Zinc is introduced in the filler metal composition and brazing flux composition of the invention as metallic particles composed of pure zinc metal, or zinc alloy like ZnAI 95/5 or ZnAI 88/12. These particles preferably have a D50 diameter comprised between 5µm and 20µm.

But, zinc is also advantageously introduced in the coating as KZnF₃ flux. In this later case, the total quantity of flux, including KZnF₃ preferably, does not exceed the previous limit of 12g/m² during the brazing.

The amount of zinc is advantageously used in a concentration range of 1 to 5 g/m² so as to give the corrosion resistance benefit and allow the galvanic protection of the fin.

For even more improving the corrosion resistance, a lithium flux, such as K₂LiAlF₆ and Li₃AlF₆ may be used.

A lithium flux which has reduced solubility and release less fluorides than standard flux can also be used.

The particles of flux preferably have a D50 diameter comprised between 2 and 6 µm.

Accordingly, the filler metal composition of the invention comprises:
a) 51-65 wt %, preferably 60-64 wt %, and more preferably 61 wt %, on the basis of the total weight of the filler metal composition, of a powder of an Al-Si alloy of following formula I:

   AlₓS_{iy} formula I

   wherein
   - x is the weight percentage, on the basis of the total weight of the Al-Si alloy, and is comprised between 86 wt % and 90 wt %, preferably is of 87.4wt % and
   - y is the weight percentage, on the basis of the total weight of the Al-Si alloy, and is comprised between between 10 and 14 wt %, preferably is of 12.6 wt %., the powder having particles having a D50 diameter comprised between 5 and 20 µm,
b) 0-15 wt %, on the basis of the total weight of the filler metal composition, of a compound of following formula II:

   AlₐZn_{b} formula II

   wherein
   - a is the weight percentage, on the basis of the total weight of the compound of formula II, of Al, and is comprised between 0 wt % and 20 wt %, and
   - b is the weight percentage, on the basis of the total weight of the compound of formula II of Zn, and is comprised between 80 wt % and 100 wt %, and
c) 25-45 wt %, preferably 27-30 wt %, more preferably 27 wt %, on the basis of the total weight of the filler metal composition, of combination of flux chosen among KZnF₃, KAlF₄, K₂AlF₅, K₃AlF₆, K₂LiAlF₆, Li₃AlF₆, CsAlF₄ and mixtures thereof.

The quantities of each elements of the filler metal composition of the invention are chosen so that the zinc to silicon mass ratio (Zn/Si) is greater than 0.3, preferably greater than or equal to 1.5.

As already stated, zinc may be introduced as Zn particles. In this case, the filler metal composition of the invention comprises 2-15 wt %, preferably 7.9-11.5 wt %, of the compound of formula II wherein a = 0 wt % and b = 100 wt %.

But zinc may also be introduced as particles of an AlZn alloy of formula I.

In such a case, the filler metal composition of the invention comprises either 2-15 wt %, preferably 12 wt %, of the compound of formula II wherein a = 5 wt % and b = 95 wt %, *i.e.* of an Al₅Zn₉₅ alloy, or 2-15 wt %, preferably 12.8 wt %, of the compound of formula II in which a = 12 wt % and b = 88 wt %, *i.e.* of an Al₁₂Zn₈₈ alloy.

Yet, zinc may also be introduced as KZnF₃ flux.

In such a case, the filler metal composition of the invention comprises no compound of formula II and the flux is a mixture of
1) KZnF₃ in an amount sufficient for providing between 2 wt % and 15 wt %, preferably 13 wt %, of Zn and
2) at least one other flux for providing a total amount of flux comprised between 10 wt % and 27 wt %, preferably of 13 wt % of flux in the filler metal composition.

The brazing flux composition of the invention comprises:
- 75-95 wt %, preferably 84-90 wt %, more preferably 82 wt %, on the basis of the total weight of the brazing flux composition, of the filler metal composition of the invention, and
- 5-25 wt %, preferably 10-16 wt %, more preferably 18 wt %, on the basis of the total weight of the brazing flux composition, of a binder, preferably chosen among an alkyde compatible acrylic ester resin, preferably an isobutylmethacrylate polymer, a mixture of C₉-C₁₂ aromatic hydrocarbons, toluene or xylen, and mixture thereof,
- optionally 0 to 0,5 wt % of surface active agent(s), preferably chosen among fluoro modified polymer or polyacrylate polymer.

Indeed, in order to make the coating on the surface, the filler metal composition is contained in an organic polymer matrix, called binder, selected for adherence on the extruded aluminum tube. This polymer is selected among the acrylic family or epoxy or combination of it.

Furthermore, the brazing flux composition of the invention advantageously also comprises at least one surface active agent so as to make the coating composition homogenous either in the liquid phase or in the solid phase after coating the tube and drying.

This surface active agent takes into account for the particle composition AISi alloy of formula I and their size of from 5 to 20 µm average diameter, and the flux powder. As the organic part has to be removed before brazing, the binder and the surface active agents are selected to be removed in conventional aerated oven before 400°C and advantageously before 300°C.

Thus, advantageously, preferably, the binder is chosen among an alkyde compatible acrylic ester resin such as an isobutylmethacrylate polymer, a mixture of C₉-C₁₂ aromatic hydrocarbons toluene or xylen, and mixture thereof, and the surface active agent(s) is(are) preferably chosen among fluoro modified polymer or polyacrylate polymer.

The invention also proposes a method for brazing an aluminum or aluminum alloy tube to a fin comprising aluminum or aluminum alloy.

This method comprises a step of coating a surface of the tube with a brazing flux composition of the invention. The tube may be an extruded tube.

Preferably, the tube is coated with between 25 and 40 g/m², which correspond to a quantity of flux comprised between 6 and 12 g/m² and zinc quantity comprised between 1 and 5 g/m².

More preferably, the tube is coated with 27,5 g/m² of brazing flux composition which corresponds to a flux quantity of 9 g/m² and zinc quantity of 2.5 g/m².

Thus, with the filler metal composition and brazing flux composition of the invention, the flux quantity is limited to a maximum of 12 g/m² and the zinc quantity is as high as 5 g/m² providing a better protection against corrosion.

The method of the invention may also comprise a step of preparing the filler metal composition. This step of preparing the filler metal composition is a step consisting mixing together 40-67 wt %, more preferably 43 wt %, on the basis of the total weight of the filler metal composition, of
a) a powder of AISi alloy following formula I:

   AlₓS_{iy} formula I

   wherein
   - x is the weight percentage, on the basis of the total weight of the Al-Si alloy, and is comprised between 86 wt % and 90 wt %, preferably is of 87.4 wt %, and
   - y is the weight percentage, on the basis of the total weight of the Al-Si alloy, and is comprised between 10 and 14 wt %, preferably is of 12.6 wt %, the powder having particles having a D50 diameter comprised between 5 and 20 µm.
b) 0-15 wt %, on the basis of the total weight of the filler metal composition, of a compound of following formula II:

   AlₐZn_{b} formula II

   wherein
   - a is the weight percentage, on the basis of the total weight of the compound of formula II, of Al, and is comprised between 0 wt % and 20 wt %, and
   - b is the weight percentage, on the basis of the total weight of the compound of formula II of Zn, and is comprised between 80 wt % and 100 wt %, and
c) 25-45 wt %, preferably 27-30 wt %, more preferably 27 wt %, on the basis of the total weight of the filler metal composition, of a flux chosen among KZnF₃, KAlF₄, K₂LiAlF₆, Li₃AlF₆, CsAlF₄ and mixtures thereof,
so that the zinc to silicon mass ratio (Zn/Si) is greater than 0.3, preferably greater than or equal to 1.5.

The step of coating the tube may be carried by any conventional process.

For example, it may be by a spray or a roller application. In these cases, the viscosity of the brazing flux composition is adjusted with a solvent in which the binder is soluble and the brazing flux composition is not soluble.

The solvent is added in a quantity such that the solid content of the mixture to be coated is higher than 70 wt % above which the coating process is stable.

Example of solvents which may be used for this aim are xylen or toluene.

In order to have the invention better understood, non-limitative and purely illustrative examples for carrying it out are given below.

### Example 1:

A filler metal composition and a brazing flux composition having the formulation disclosed in following table 1 have been prepared by mixing the different listed compounds:

**Table 1:**

| **Chemical Compound** | | **Content** |
|---|---|---|
| Filler metal composition | Al_{87.4}Si_{12.6} | 13.5 g/m² (D50=5-20µm) |
| | pure zinc (grade 25) | 2.5 g/m² (D50=5-20µm) |
| | Flux (KAlF₄) | 6.5 g/m² (D50 = 2-6µm) |
| Filler metal composition mass | | 22.5 g/m² |
| Binder B67 paraloid® (Isobutylmethacrylate polymer, alkyde compatible acrylic ester resin) | | 5 g/m² |
| Total brazing flux composition mass | | 27.5 g/m² |
| Filler metal (Al₈₈Si₁₂) | | 13.5 g/m² |
| Zn | | 2.5 g/m² |
| Zn/Si | | 1.5 |

Good brazeability is achieved with such composition.

Figure 3 shows the brazing joint cross section analyzed by metallography.

The corrosion resistance of this brazing joint is demonstrated by figure 4 and figure 5 as compared to figure 2 which shows the corrosion of the brazing joint between the tube and the fin made with the method of the prior art using a zinc arc spray technology.

As it can be seen from figures 4 and 5, after 1000 hours of life in Swaat test, the brazing joint made with the composition of example 1 according to the invention, is only a little corroded whereas in the same condition, the prior art brazing joint is corroded in a such way that the tube is perforated.

A good brazeability is also achieved by replacing pure zinc by a zinc alloy such as Zn₉₅Al₅ or Zn₈₈Al₁₂. 3.95 g/m² of zinc alloy are applied in the case of Zn₉₅Al₅, while 4.25 g/m² of zinc alloy are applied in the case of Zn₈₈Al₁₂. In both cases, this corresponds to the application of 3.75 g/m² of zinc.

### Example 2:

A filler metal composition and a brazing flux composition according to the invention have been prepared as disclosed in following table 2.

**Table 2:**

| **Chemical Compound** | | **Content** |
|---|---|---|
| Filler metal composition | Al₈₈Si₁₂ | 13.5 g/m² D50 5-20µm |
| | KZnF3 | 6 g/m² (D50 2-6µm) |
| | Flux (KAlF₄) | 3 g/m² (D50 2-6µm) |
| Filler metal composition mass | | 22.5 g/m² |
| Binder B67 paraloid® | | 5 g/m² |
| Total brazing flux composition mass | | 27.5 g/m² |
| AlSi alloy | | 13.5 g/m² |
| Zn | | 2.4 g/m² |
| Zn/Si | | 1.5 |

Good brazeability is achieved with such composition.

### Example 3:

A filler metal composition and a brazing flux composition according to the invention have been prepared as disclosed in following table 3.

**Table 3:**

| **Chemical Compound** | | **Content** |
|---|---|---|
| Filler metal composition | Al_{87.4}Si_{12.6} | 20 g/m² D50= 5-20µm |
| | Zn as KZnF₃ | 1.85 g/m² (D50= 2-6µm) |
| | Flux (KAlF₄) | 7.95 g/m² (D50 2-6µm) |
| Filler metal composition mass | | 29.8 g/m² |
| Binder B67® (aromatic C₉-C₁₂ hydrocarbon mixture) | | 5 g/m² |
| Total brazing flux composition mass | | 33.8 g/m² |
| AlSi alloy | | 20 g/m² |
| Zn | | 0.76 g/m² |
| Zn/Si | | 0.3 |

Good brazeability is achieved with such composition.

### Example 4: Comparative example.

A brazing flux composition has been formulated by mixing the chemical compounds listed in following table 2 in the quantities given in table 4.

**Table 4:**

| **Item** | **Composition** | | **Coating** |
|---|---|---|---|
| Raw material characteristics | Filler metal composition | KAlF₄ | 13% |
| | | Al_{87.4}Si_{12.6} | 60% |
| | | KZnF3 | 27% |
| | Particles size | Al_{87.4}Si_{12.6} | D50: 5- 20 µm |
| | | KZnF3 | D50: 2- 6 µm |
| | | KAlF₄ | D50: 2- 6 µm |
| Composition of *dry-coating* on tube | Filler metal composition | | 82 % |
| | dry binder (isobutyl methacrylate) | | 18 % |
| Load on tube | Mass of brazing flux composition | | 27.5- g/m² |
| | Mass of Zn | | 2.46 g/m² |
| | Mass of flux | | 9 g/m² |

Figure 6 shows that a good brazeability is obtained with this comparative brazing flux composition.

However, the corrosion resistance is lower than with the brazing flux composition of the invention as shown in figure 7 where the tube lateral corrosion can be seen after 1000 hours of test according to ASTM G85, whereas with the brazing flux composition of the invention, the tube lateral corrosion in the same conditions is less important, as can be seen from figure 4.

## Claims

1. Filler metal composition comprising :
a) a powder of an Al-Si alloy of following formula I:
AlₓS_{iy} formula I
wherein
- x is the weight percentage, on the basis of the total weight of the AISi alloy of Al, and is comprised between 86 wt % and 90 wt %, and
- y is the weight percentage, on the basis of the total weight of the AISi alloy of Si, and is comprised between 10 and 14 wt %,
b) zinc,
so that the zinc to silicon mass ratio (Zn/Si) is more than 0.3 preferably greater than or equal to 1.5.

2. The filler metal composition of claim 1 comprising 51-65 wt %, on the basis of the total weight of the filler metal composition, of the compound of formula I.

3. The filler metal composition of any of claims 1 or 2 comprising 0-15 wt %, on the basis of the total weight of the filler metal composition, of a compound of following formula II:
AlₐZn_{b} formula II
wherein
- a is the weight percentage, on the basis of the total weight of the compound of formula II, of Al, and is comprised between 0 wt % and 20 wt %, and
- b is the weight percentage, on the basis of the total weight of the compound of formula II of Zn, and is comprised between 80 wt % and 100 wt %.

4. The filler metal composition of any of claims 1 to 3, comprising 25-45 wt %, on the basis of the total weight of the filler metal composition, of a flux chosen among KZnF₃, KAlF₄,K₂AlF₅, K₃AlF₆, K₂LiAlF₆, Li₃AlF₆, CsAlF₄ and mixtures thereof.

5. The filler metal composition of any of claims 3 or 4 comprising 2-15 wt %, of the compound of formula II wherein a = 0 wt % and b = 100 wt %.

6. The filler metal composition of any of claims 3 or 4 comprising 2-15 wt %, of the compound of formula II wherein a = 5 wt % and b = 95 wt %.

7. The filler metal composition of any of claims 3 or 4 comprising 2-15 wt %, of the compound of formula II in which a = 12 wt % and b = 88 wt %.

8. The filler metal composition of claim 4 comprising 0 wt % of the compound of formula II and wherein the flux is a mixture of KZnF₃ in an amount sufficient for providing between 2 wt % and 15 wt %, of Zn and at least one other flux for providing a total amount of flux(s) comprised between 25 wt % and 45 wt %, of flux in the filler metal composition.

9. The filler metal composition of any of claims 4 or 8 wherein the particles of the flux have a D50 diameter comprised between 2 and 6 µm.

10. The filler metal composition of any of claims 3 to 9 wherein the particles of the compound of formula II have a D50 diameter comprised between 5 - 20µm.

11. Brazing flux composition comprising:
- 75-95 wt %, on the basis of the total weight of the brazing flux composition, of the filler metal composition of anyone of claims 1-10, and
- 5-25 wt %, on the basis of the total weight of the brazing flux composition, of a binder, preferably chosen among an alkyde compatible acrylic ester resin, preferably an isobutylmethacrylate polymer, a mixture of C₉-C₁₂ aromatic hydrocarbons toluene or xylen, and mixtures thereof,
- optionally 0-0.5%wt % of a surface active agent(s).

12. A method for brazing an aluminum or an aluminum alloy tube to a fin comprising aluminum or aluminum alloy comprising a step a) of depositing a brazing flux composition according to claim 11 on the surface of the tube.

13. The method of claim 12 comprising, before step a) of depositing the brazing flux composition, a step b) of preparing this brazing flux composition, this step b) comprising mixing:
- 75-95 wt %, on the basis of the total weight of the brazing flux composition, of the filler metal composition of anyone of claims 1 to 10, and
- 5-25 wt %, on the basis of the total weight of the brazing flux composition, of a binder, preferably chosen among an alkyde compatible acrylic ester resin, preferably an isobutylmethacrylate polymer, a mixture of C₉-C₁₂ aromatic hydrocarbons xylen or toluene, and mixture thereof,
- optionally 0-0.5% wt % of a surface active agent(s).

14. The method of claim 12 or 13, wherein the brazing flux composition of claim 11 is deposited in an amount comprised between 25 and 40 g/m².

15. The method of anyone of claims 12 to 14 wherein step a) of depositing the brazing flux composition is carried out by spray or roller application and in which the brazing flux composition is put in a solvent in which the optional binder is soluble and in which the brazing flux composition is not soluble.

16. The method of claim 15 wherein the solvent is added in amount such that the mixture of the flux brazing composition and solvent has a solid content higher than 70 % in weight.

17. A method of manufacturing a heat exchanger comprising a step of coating a aluminum or aluminum alloy tube with a brazing flux composition according to claim 11.
